# EUROPEAN PATENT SPECIFICATION

(11) **EP 2 316 671 B1**
(45) Date of publication and mention of the grant of the patent: **09.05.2012**
(21) Application number: 10188270.2
(22) Date of filing: 20.10.2010
(51) Int. Cl.: B60G 9/02, B60G 11/08

(54) **A tilting front axle with elastic contrast means**
Schwenkbar angeordnete vordere Starachse mit elastischen Mitteln
Essieu avant monté à pivot avec moyens élastiques

(30) Priority: 27.10.2009 IT RE20090103
(43) Date of publication of application: 04.05.2011
(73) Proprietor: Emak S.p.A., 42011 Bagnolo in Piano (Reggio Emilia) (IT)
(72) Inventor: Cerreto, Nicola, 42011 Bagnolo In Piano (Reggio Emilia) (IT)
(74) Representative: Corradini, Corrado

(56) References cited:
- DE-C- 930 011
- FR-A- 904 958
- FR-A1- 2 681 563
- GB-A- 851 121
- JP-A- 1 074 179
- JP-A- 58 214 406
- JP-A- 60 124 512
- US-A- 2 785 908
- US-A- 5 704 643

## Description

Vehicles are known which comprise a frame equipped with wheels upon which an adequate motorization and driving means are placed, and which frame bears a work tool.

Such vehicles comprise four wheels of which two drive wheels and two steered wheels, generally positioned on the front axle.

In order to enable the vehicle to adapt to terrain irregularity, the front axle can be connected to the frame such that it tilts around a pivot located at the centre of the axle, the axis of the pivot being close to horizontal.

Although this known configuration distributes the weight of the vehicle resting on the front axle over two wheels, from the point of view of stability it is equivalent to a configuration providing a single front wheel positioned at the centre of the axle.

Essentially, the frame equipped with four wheels behaves like a tricycle.

It is obvious that following an inclination of the frame, if the barycentric vertical axis thereof, together with the relative solidly-constrained organs, move either to the right or to the left of the oscillation axis of the axle, the axis can shift externally of the area delimited by the rear wheels and by the centre of the axle, i.e. the normal ground-contact area of the vehicle, thus causing the vehicle to overturn.

The aim of the present invention is to obviate the above-cited drawback without forsaking the constructional simplicity of the horizontally pivoted axle, which enables the vehicle to rest on four wheels despite any irregularity in terrain.

The aim is attained by the invention thanks to the fact that oscillations of the tilting axis in relation to the oscillation axis thereof are contrasted in both directions by elastic devices which do not affect the freedom of movement of the axle.

US 2,785,908 shows a vehicle having two main portions, namely a rear support portion and a forward body member that may tilt one with respect to the other on an axis which is parallel to a longitudinal axis of the vehicle. A set of spring members that are placed under the forward body member act as a stabilizing means for stabilizing the rear support portion with respect to the forward body member. The set of spring members engages from above lugs mounted to the undersurface of a crosspiece of the forward body member. When the forward body member tilts with respect to the rear support portion, the spring members can exert a downward force on the wheels that are upstream.

FR 904 958 shows a four wheel vehicle that comprises a frame having a rigid rear axle and a tiltable front axle on an axis located at a halfway point on the axle. Between the axle and the frame of the vehicle elastic means are provided that contrast in both directions the oscillations of the axle due to the irregularities of the terrain. An oscillation of the axle in one direction causes the compression of a spring that reacts with an upward force.

JP-A-01074179 shows a turn driving gear for a four-wheel drive vehicle, in particular an agricultural tractor, in which at each side of the vehicle body a lift mechanism is arranged. The lift mechanism comprises a cylinder that can be actuated, for example, when the front wheel is steered exceeding a fixed angle in the turning direction, and in this case the lift mechanism is driven and controlled so as to lift the front wheel in the inner side of turning.

DE-C-930011 shows an axle for a vehicle, the axle being rotatably connected to a frame of the vehicle. A series of curved springs are mounted on the frame and connected to both sides of the axle in a superior portions thereof.

### A Tilting Front Axle with Elastic Contrast Means

The invention relates to the self-propelling small public works vehicles utilized in agriculture and more specifically in gardening.

Thanks to the presence of the elastic means and of the force contrasting the oscillation exerted thereby, the vertex of the triangle defining the contact area of the vehicle with the terrain shifts towards an end of the axle which, by tilting, moves against the respective leaf spring, making the contact area receive the vehicle, thus guaranteeing the stability of the vehicle from overturning.

For these vehicles the maximum bearable lateral inclination before overturning is 20°; it has been noted that by applying a direct upwards force of between 5 kg and 20 kg to the front wheel positioned downstream, by means of suitable elastic means which start working when the axle tilts, the maximum tilt angle increases by from 3° to 8°.

According to the invention the elastic means are spring means made of a single steel rod twisted about a centre thereof and locked on a pivot of the frame parallel to the longitudinal axis of the frame and fixed at opposite ends thereof in proximity of ends of the axle. In a preferred embodiment of the inventon, the elastic devices are leaf spring means.

The advantages and constructional and functional characteristics of the invention will emerge from the detailed description that follows, illustrated in the figures of the accompanying tables of drawings and relating to a preferred embodiment of the invention, given by way of non-limiting example.
Figure 1 is a perspective view of the front axle.

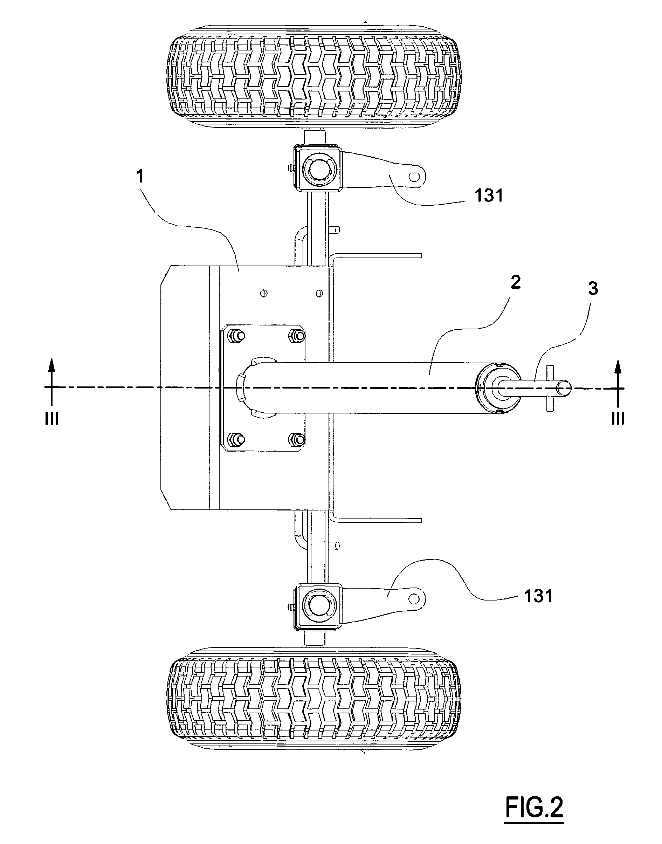

Figure 2 illustrates the tiltable front axle in plan view.

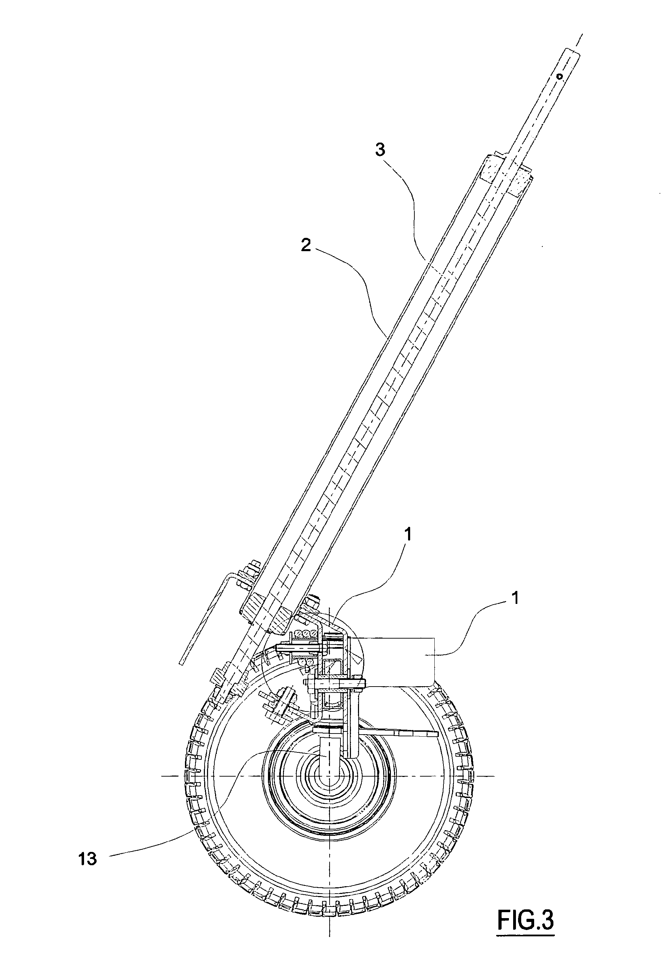

Figure 3 is section III-III of Figure 2.
Figure 4 is an enlarged detail of figure 3.

The figures illustrate the front portion 1 of the frame of the vehicle to which the steering column 2 end connects, inside which column 2 the revolving shaft 3 of the steering wheel 5 is supported.

A pinion 31 is splined on the lower end of the shaft 3 which pinion 31 activates the four-bar link of the steering, in a usual way which is not illustrated.

A sheet metal element 4 is fixed to the front portion 1 and develops parallel with but at a distance from the said front portion1.

A space forms between the portion 1 and the element 4 which accommodates the central part of the front axle 5.

The axle 5 is tiltably constrained between the front portion 1 and the element 4 by means of the bolt 7 on which the bush 8 on which the front axle 5 rotates is inserted.

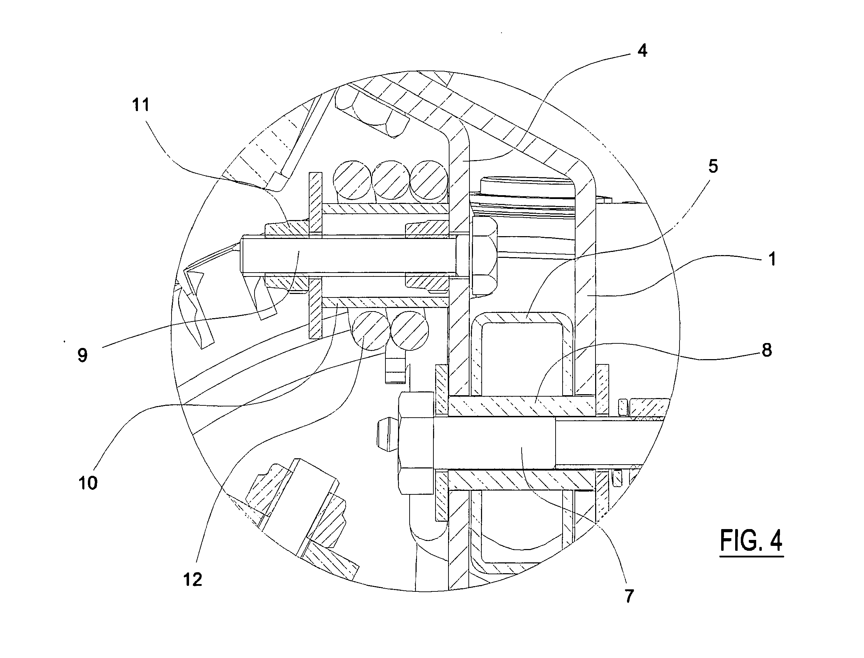

A second bolt 9 is fitted on the element 4 superiorly of the bolt 7 (figure 4), to which second bolt 9 a further bush 10 is constrained and locked by means of a nut 11.

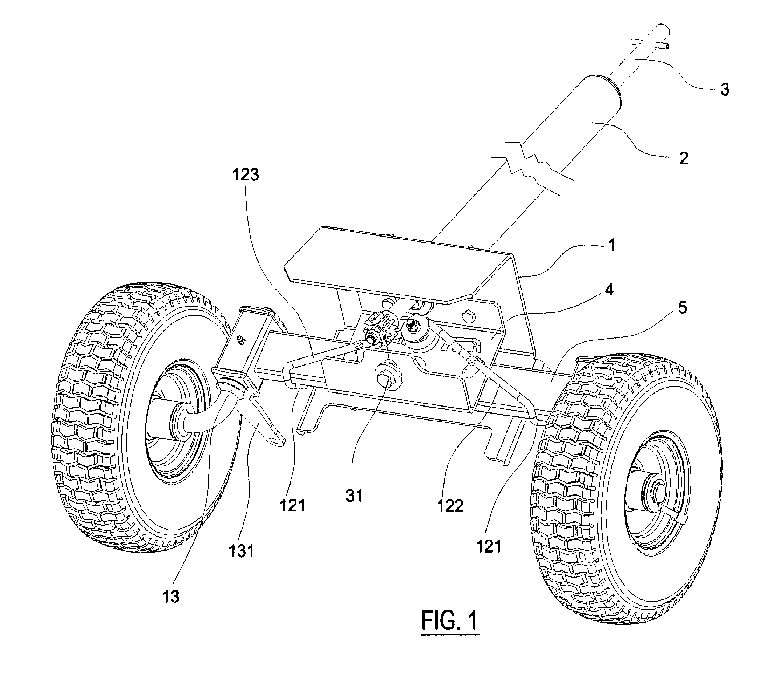

The bush 10 is torsionally locked in relation to the element 4, and is received and blocked inside two spirals of an elastic rod 12, ends of which elastic rod 12 extend as far as the front axle 5 to which they are hooked by the bent tracts 121 and the ends thereof (figure 1).

The extension of the spirals constitutes two elastic springs, 122 and 123 respectively, which contrast the oscillations of the axle 5 in relation to the portion 1 of the frame of the vehicle.

The spindles 13 of the wheels are rotatably fitted to the ends of the axle 5 and are connected to the four-bar link 5, not illustrated, of the steering wheel by means of the levers 131.

The balance of the vehicle requires that the barycentric vertical axis falls within the contact area with the ground.

In the absence of the leaf springs 122, 123 this area is delimited by a triangle having its base between the terrain-contacting points of the rear wheels and the vertex on the vertical passing through the bush 8.

Thanks to the presence of the leaf springs 122, 123 the vertex of the triangle that defines the terrain-contacting area of the vehicle shifts towards the end of the axle which, by tilting, shifts in contrast with the respective spring leaf, so that the terrain-contacting surface encloses the barycentric axis of the vehicle, guaranteeing in this way the stability of the vehicle from overturning.

## Claims

1. A four-wheeled vehicle comprising a frame equipped with a rigid rear axle and a front axle (5) which is tiltable on an axis located at a halfway point of the axle (5) and parallel to a longitudinal axis of the vehicle, wherein elastic means are positioned between the axle (5) and the vehicle frame, the elastic means being spring means that are made of an elastic rod (12) twisted about a centre thereof and locked on a pivot of the frame parallel to the longitudinal axis of the frame and superior to the pivot axis of the axle (5) and fixed at opposite ends thereof in proximity of the ends of the axle (5), and wherein the elastic means contrast, in each direction, oscillations of the axle caused by irregularity of a terrain, by means of elastic forces both applied upwards on the wheels of the tiltable axle (5) said forces being different from one another.

2. The vehicle of claim 1 **characterised in that** the elastic means comprise a leaf spring (122, 123).

3. The vehicle of claim 2 **characterised in that** the leaf spring (122, 123) is blocked at a centre thereof on a pivot parallel to the longitudinal axis of the vehicle, and is connected at ends thereof in proximity of ends of the tilting axle (5).

4. The vehicle of claim 3 **characterised in that** the leaf spring (122, 123) exerts an upwards pressure comprised between 5 kg and 20 kg at the end of the axle (5).

## Patentansprüche

1. Vierrädriges Fahrzeug, einen Rahmen umfassend, der mit einer starren Hinterachse und einer Vorderachse (5) ausgestattet ist, die auf einer Achse schrägstellbar ist, die an einem Mittelpunkt der Achse (5) angeordnet ist und parallel zu einer Längsachse des Fahrzeugs verläuft, wobei zwischen der Achse (5) und dem Fahrzeugrahmen elastische Mittel positioniert sind, wobei die elastischen Mittel Federmittel sind, die aus einem elastischen Stab (12) hergestellt sind, der um seine Mitte gewunden ist und an einem Drehzapfen des Rahmens parallel zur Längsachse des Rahmens und höher liegend als die Drehachse der Achse (5) arretiert ist und mit seinen entgegengesetzten Enden in der Nähe der Enden der Achse (5) befestigt ist, und wobei die elastischen Mittel mit Hilfe von Federkräften, die beide nach oben auf die Räder der schrägstellbaren Achse (5) ausgeübt werden, in jeder Richtung der Schwingung der Achse entgegenwirken, die durch Unregelmäßigkeiten des Geländes verursacht werden, wobei die Kräfte unterschiedlich sind.

2. Fahrzeug nach Anspruch 1, **dadurch gekennzeichnet, dass** die elastischen Mittel eine Bandfeder (122, 123) umfassen.

3. Fahrzeug nach Anspruch 2, **dadurch gekennzeichnet, dass** die Bandfeder (122, 123) in ihrer Mitte an einem Drehzapfen parallel zur Längsachse des Fahrzeugs arretiert ist und mit ihren Enden in der Nähe der Enden an der sich schräg stellenden Achse (5) befestigt ist.

4. Fahrzeug nach Anspruch 3, **dadurch gekennzeichnet, dass** die Bandfeder (122, 123) am Enden der Achse (5) einen nach oben gerichteten Druck ausübt, der zwischen 5 kg und 20 kg beträgt.

## Revendications

1. Véhicule à quatre roues comprenant un châssis équipé d'un essieu arrière rigide et d'un essieu avant (5) inclinable autour d'un axe passant par un point situé à mi-distance sur l'essieu (5) et parallèle à un axe longitudinal du véhicule, dans lequel des moyens élastiques sont agencés entre l'essieu (5) et le châssis du véhicule, les moyens élastiques étant des moyens à ressort qui sont constitués d'une tige élastique (12) vrillée autour d'un centre de celle-ci, verrouillée à un pivot du châssis parallèle à l'axe longitudinal du châssis, supérieure à l'axe du pivot de l'essieu (5) et fixée à ses extrémités opposées à proximité des extrémités de l'essieu (5), et dans lequel les moyens élastiques équilibrent, dans chaque direction, des oscillations de l'essieu provoquées par les irrégularités du terrain au moyen de forces élastiques appliquées toutes les deux vers le haut sur les roues de l'essieu inclinable (5), lesdites forces étant différentes l'une de l'autre.

2. Véhicule selon la revendication 1, **caractérisé en ce que** les moyens élastiques comprennent un ressort à lame (122, 123).

3. Véhicule selon la revendication 2, **caractérisé en ce que** le ressort à lame (122, 123) est bloqué à un centre de celui-ci sur un pivot parallèle à l'axe longitudinal du véhicule, et est connecté à ses extrémités à proximité des extrémités de l'essieu inclinable (5).

4. Véhicule selon la revendication 3, **caractérisé en ce que** le ressort à lame (122, 123) exerce une pression de bas en haut comprise entre 5 kg et 20 kg à l'extrémité de l'essieu (5).
